# EUROPEAN PATENT APPLICATION

(11) **EP 1 439 480 A2**
(43) Date of publication of application: **21.07.2004**
(21) Application number: 04000858.3
(22) Date of filing: 16.01.2004
(51) Int. Cl.: G06F 17/60, H04L 29/06

(54) **System for authentication in electronic commerce and method of carrying out the same**

(30) Priority: 16.01.2003 JP 2003008081
(71) Applicant: NEC CORPORATION, Tokyo (JP)
(72) Inventor: Kawasaki, Haruo, Tokyo (JP)
(74) Representative: Glawe, Delfs, Moll & Partner

(57) **Abstract**

A system for carrying out authentication in settlement account in electronic commerce as to whether a user (400) is really the person himself/herself, is characterized by a mobile key unit (300, 600) having a function of making short-distance radio-signal communication, and a mobile terminal (200, 500) having a function of making radio-signal communication, wherein the mobile terminal (200, 500) recognizes that a user (400) thereof is the person himself/herself only when the mobile key unit (300, 600) is located in an area in which the mobile terminal (200, 500) can make radio-signal communication with the mobile key unit (300, 600).

## Description

### BACKGROUND OF THE INVENTION

### FIELD OF THE INVENTION

The invention relates to a system for carrying out authentication in settlement account in electronic commerce as to whether a user is really the person himself/herself, and a method of doing the same.

### DESCRIPTION OF THE RELATED ART

With popularization of a cellular phone, it is expected that a cellular phone is designed to have a function of electronic money and/or a function of a credit card such that settlement account in electronic commerce can be carried out in a cellular phone. When settlement account in electronic commerce is carried out in a mobile communication terminal such as a cellular phone, it is required for a mobile communication terminal to prevent from being illegally used by others in the cases that a mobile communication terminal is lost or robbed.

However, it is quite difficult for a mobile communication terminal to have security and serviceability both satisfied by a user in carrying out settlement function incorporated into a cellular phone. If security is emphasized, steps for carrying out authentication would be complex with the result of poor serviceability, and if serviceability is emphasized, security would become poor.

Thus, electronic commerce is always accompanied with two requirements contradictory to each other, namely, ensuring security and pursuing serviceability. This is just a weak point in electronic commerce. There has been conventionally presented a system which provides sufficient security, but is complex in carrying out authentication, or a system which is convenient for a user, but provides poor security. Hence, a lot of users make payment in cash or by a credit card.

Many attempts have been made to properly carry out authentication.

The most popular authentication is carried out by comparing a password input by a user to a password in advance stored. However, a user has to memorize his/her password. If a user forgets his/her password, it would be impossible to carry out authentication.

There has been suggested biometric authentication making use of human natures such as iris, voiceprint or fingerprint. However, devices for carrying out biometric authentication are expensive, and further, cannot provide sufficient serviceability, because a user has to carry out requisite steps while he/she is conscious of authentication.

Some systems such as a system in which a user is not requested to make signature in credit card shopping pursue serviceability. However, in such systems, if a user lost his/her credit card without knowledge, he/she suffers from illegal use of the credit card. Namely, security is sacrificed in return for serviceability.

For instance, Japanese Patent Application Publication No. 2001-243382 has suggested an authentication system. In the authentication system, a request of making payment is transmitted to a user's mobile communication terminal. Then, the user's mobile communication terminal transmits a request of carrying out settlement account to a settlement administration server to which subscribers are recorded in advance. The settlement administration server carries out authentication as to whether a user of the mobile communication terminal is a subscriber having been recorded therein, and, if a user is such a subscriber, carries out settlement account. The settlement administration server transmits results of settlement account to the user's mobile communication terminal.

### SUMMARY OF THE INVENTION

As mentioned above, the conventional systems for carrying out authentication in electronic commerce are accompanied with a problem that serviceability would be degraded, if security is strengthened, and vice versa.

In view of the problem, it is an object of the present invention to provide a system for carrying out authentication in settlement account in electronic commerce without deterioration in serviceability, ensuring security.

It is also an object of the present invention to provide a method of carrying out authentication in settlement account in electronic commerce as to whether a user is really the person himself/herself

It is further an object of the present invention to provide a program for causing a computer mounted in a mobile terminal having a function of making radio-signal communication, to carry out the above-mentioned method.

In one aspect of the present invention, there is provided a system for carrying out authentication in settlement account in electronic commerce as to whether a user is really the person himself/herself, characterized by a mobile key unit having a function of making short-distance radio-signal communication, and a mobile terminal having a function of making radio-signal communication, wherein the mobile terminal recognizes that a user thereof is the person himself/herself only when the mobile key unit is located in an area in which the mobile terminal can make radio-signal communication with the mobile key unit.

The system may further include an authentication unit for carrying out authentication in settlement account, and wherein the mobile terminal, on receipt of a request of carrying out authentication from the authentication unit, transmits a request to the mobile key unit to make communication by transmitting radio-signals to the mobile key unit, and transmits a response to the authentication unit, based on information stored therein, if data relating to the mobile key unit with which the mobile terminal was successful in making radio-signal communication is coincident with data in advance stored in the mobile terminal.

It is preferable that the mobile terminal requests a user to input a password thereinto for authentication, if data relating to the mobile key unit with which the mobile terminal was successful in making radio-signal communication is not coincident with data in advance stored in the mobile terminal, or if the mobile terminal was not successful in making radio-signal communication with the mobile key unit.

In accordance with the present invention, if a user has the key unit, for instance, the terminal device automatically responds to a request of carrying out authentication, transmitted from the authentication unit. Hence, it is possible to carry out settlement account in electronic commerce without necessity of carrying out tiresome steps for a user such as inputting a password into his/her mobile terminal. If a user lost his/her mobile terminal, and accordingly, the mobile key unit is not located within an area in which the mobile terminal can make short-distance radio-signal communication with the mobile key unit, the mobile terminal does not respond to a request of carrying out authentication, transmitted from the authentication unit, unless a user inputs a predetermined password into his/her mobile terminal. Thus, in accordance with the present invention, only if a user has the mobile key unit with himself/herself, authentication is automatically carried out between the authentication unit and his/her mobile terminal. Settlement account in electronic commerce can be carried out with security ensured and without deterioration in serviceability for a user.

The mobile terminal in the present invention automatically responds to a request received from the authentication unit to carry out authentication as to whether a user of the mobile terminal is the person himself/herself, without urging a user to carry out any steps. Since the mobile terminal makes short-distance radio-signal communication with the mobile key unit, the mobile terminal automatically makes the above-mentioned response only when the mobile key unit is located within a distance in which the mobile terminal can make short-distance radio-signal communication with the mobile key unit. Hence, by incorporating or putting the mobile key unit into a user's accessories such as a watch, a spectacle, a budge, a key-holder, or a purse, it would be possible to automatically carry out authentication. If the mobile key unit is located out of the above-mentioned distance, the mobile terminal does not respond to a request received from the authentication unit. Accordingly, even if a user lost his/her mobile terminal having a function of carrying out settlement account in electronic commerce, it would be possible to prevent others from illegally using the user's terminal.

As mentioned above, the present invention makes it possible to carry out authentication as to whether a user is the person himself/herself without necessity of a user to carry out any steps for authentication, keeping serviceability until completion of settlement, and further, ensuring security.

It is preferable that the mobile key unit makes radio-signal communication with the mobile terminal in response to the request transmitted from the mobile terminal, if data relating to the mobile terminal transmitting the request to the mobile key unit is coincident with data in advance stored therein.

Even if a mobile terminal data of which is not stored in a mobile key unit transmits a request to the mobile key unit to make communication, the mobile key unit does not make short-distance radio-signal communication with the mobile terminal. This ensures enhancement in reliability in the system.

In another aspect of the present invention, there is provided a method of carrying out authentication in settlement account in electronic commerce as to whether a user is really the person himself/herself, including (a) storing data relating to a mobile key unit having a function of making short-distance radio-signal communication, into a mobile terminal, (b) transmitting a request of carrying out authentication to the mobile terminal from an authentication unit for carrying out authentication in settlement account, (c) on receipt of the request, transmitting a request to the mobile key unit from the mobile terminal to make communication by transmitting radio-signals to the mobile key unit, and (d) transmitting a response to the authentication unit from the mobile terminal, based on information stored in the mobile terminal, if data relating to the mobile key unit with which the mobile terminal was successful in making radio-signal communication is coincident with data in advance stored in the mobile terminal.

In still another aspect of the present invention, there is provided a program for causing a computer mounted in a mobile terminal having a function of making radio-signal communication, to carry out the above-mentioned method.

### BRIEF DESCRIPTION OF THE DRAWINGS

FIG. 1 is a block diagram of a system for carrying out authentication in settlement account in electronic commerce as to whether a user is really the person himself/herself, in accordance with the first embodiment of the present invention.
FIG. 2 is a flowchart showing steps to be carried out by the mobile terminal in the first embodiment.
FIG. 3 is a flowchart showing steps to be carried out by the authentication unit in the first embodiment.
FIG. 4 is a flowchart showing steps to be carried out by the mobile key unit in the first embodiment.
FIG. 5 is a block diagram of a system for carrying out authentication in settlement account in electronic commerce as to whether a user is really the person himself/herself, in accordance with the second embodiment of the present invention.

### DESCRIPTION OF THE PREFERRED EMBODIMENTS

### [First Embodiment]

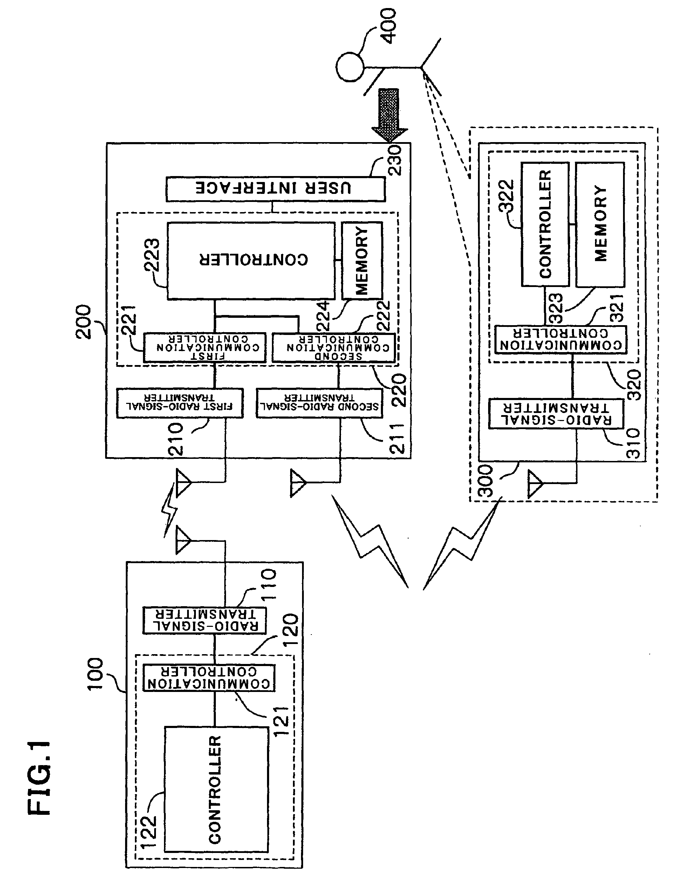

FIG. 1 is a block diagram of a system for carrying out authentication in settlement account in electronic commerce as to whether a user is really the person himself/herself, in accordance with the first embodiment of the present invention.

In the first embodiment, authentication in settlement account in electronic commerce is automatically carried out by making use of short-distance radio-signal communication technique such as Bluetooth or radio-signal LAN.

As illustrated in FIG. 1, the system in accordance with the first embodiment is comprised of an authentication unit 100, a mobile terminal 200, and a mobile key unit 300.

The authentication unit 100 is usually put in a shop. The authentication unit 100 may be located far away from a ship, in which case, the shop makes communication with the authentication unit 100 through a cellular phone network or Internet.

The mobile terminal 200 may be attached to or incorporated into a cellular phone. As an alternative, the mobile terminal 200 may be attached to or incorporated into a personal computer or a personal digital assistant (PDA).

The authentication unit 100 and the mobile terminal 200 make communication with each other through a non-contact type integrated circuit (IC) or through radio-signals such as infra-red ray signals. The authentication unit 100 and the mobile terminal 200 may be electrically connected to each other through a cable or an external terminal as well as through Bluetooth, radio-signal LAN.

Settlement account between the authentication unit 100 and the mobile terminal 200 may be carried out not only by electronic money or a credit card, but also by any means. That is, since the system is not dependent on communication system and settlement system between the authentication unit 100 and the mobile terminal 200, any communication and settlement systems may be selected.

The mobile key unit 300 is usually attached to or incorporated into an accessory which a user always has, such as a watch, a pair of spectacles, a budge, a key-holder, a purse, a porch, and so on.

Hereinbelow is briefly explained an operation of the authentication unit 100, the mobile terminal 200 and the mobile key unit 300.

When a user 400 purchases something in electronic commerce, he/she transmits information for electronic commerce to the authentication unit 100 through his/her device into which the mobile terminal 200 is incorporated, and receives information for electronic commerce from the authentication unit 100 through his/her device. Any steps for doing so, communication system and settlement system may be selected, since the system in accordance with the first embodiment is not dependent on them. For instance, it may be assumed that the authentication unit 100 is comprised of a device only for electronic commerce, installed in a shop, and the mobile terminal 200 is comprised of a cellular phone, in which case, the authentication unit 100 makes access to an electronic money or credit card section arranged in the cellular phone, through a non-contact IC or infra-red ray.

A detailed structure of the system in accordance with the first embodiment is explained hereinbelow with reference to FIG. 1.

The authentication unit 100 is comprised of a radio-signal transmitter 110 and a computer 120 comprised of a central processing unit (CPU) working in accordance with a program.

The computer 120 is comprised of a communication controller 121 and a controller 122.

The mobile terminal device 200 is comprised of a first radio-signal transmitter 210, a second radio-signal transmitter 211, a computer 220 comprised of a central processing unit (CPU) working in accordance with a program, and a user interface unit 230.

The computer 220 is comprised of a first communication controller 221 associated with the first radio-signal transmitter 210, a second communication controller 222 associated with the second radio-signal transmitter 211, a controller 223, and a memory 224.

The mobile key unit 300 is comprised of a radio-signal transmitter 310, and a computer 320 comprised of a central processing unit (CPU) working in accordance with a program.

The computer 320 is comprised of a communication controller 321, a controller 322, and a memory 323.

The communication controller 121 of the authentication unit 100 is designed to have functions of controlling an operation of the radio-signal transmitter 110, and carrying out communication by virtue of a communication protocol suitable for the communication. On receipt of a command from the controller 122, the communication controller 121 transmits an instruction to the radio-signal transmitter 110 to make communication with and establish a channel to the mobile terminal 200 for carrying out settlement account and authentication in electronic commerce.

The controller 122, when settlement account in electronic commerce is to be carried out, causes the communication controller 121 to make communication with the mobile terminal 200, and requests the mobile terminal 200 to carry out authentication to confirm whether a user of the mobile terminal 200 is really the person himself/herself, in dependence on how settlement account is carried out.

The first communication controller 221 of the mobile terminal 200 is designed to have functions of controlling an operation of the first radio-signal transmitter 210, and carrying out communication by virtue of a communication protocol suitable for the communication. On receipt of a command from the controller 223, the first communication controller 221 transmits an instruction to the first radio-signal transmitter 210 to make communication with and establish a channel to the authentication unit 100 for carrying out settlement account and authentication in electronic commerce.

The controller 223, when settlement account in electronic commerce is to be carried out, causes the first communication controller 221 to make communication with the authentication unit 100, and responds to a request to carry out authentication, transmitted from the authentication unit 100, in dependence on how settlement account is carried out.

The controller 223 retrieves the memory 224 to check whether information used for carrying out authentication is stored in the memory 224. If not, the controller 223 does not automatically respond to a request to carry out authentication, transmitted from the authentication unit 100, and requests a user 400 through the user interface unit 230 to input a predetermined password into the computer 220. If the information is stored in the memory 224, the controller 223 instructs the second communication controller 222 to make communication with the mobile key unit 300 in accordance with the information.

If the second communication controller 222 informs the controller 223 that communication between the mobile terminal 200 and the mobile key unit 300 was successfully made, the controller 223 confirms that a user of the mobile terminal 200 is the person himself/herself, and thus, automatically responds to a request to carry out authentication, transmitted from the authentication unit 100.

On receipt of instructions from a user 400 through the user interface unit 230, the controller 223 stores information used for authentication into the memory 224, deletes the information out of the memory 224, and/or edits the information stored in the memory 224. For instance, the controller 223 stores data relating to the mobile key unit 300, and a password used for carrying out authentication, into the memory 224. The computer 220 of the mobile terminal 200 can automatically respond to the authentication unit 100 by referring to these data.

The second communication controller 222 of the mobile terminal 200 is designed to have functions of controlling an operation of the second radio-signal transmitter 211, and carrying out communication by virtue of a communication protocol suitable for the communication. On receipt of a command from the controller 223, the second communication controller 222 transmits an instruction to the second radio-signal transmitter 211 to make radio-signal communication with the mobile key unit 300 for checking whether the mobile key unit 300 is located within an area in which the mobile terminal 200 can make short-distance radio-signal communication with the mobile key unit 300.

The controller 322 of the mobile key unit 300 instructs the communication controller 321 to wait for a request of making communication therewith, transmitted from the mobile terminal 200. The controller 322 can retrieve the memory 323 to check data relating to the mobile terminal 200 or can store data relating to the mobile terminal 200 into the memory 323.

The communication controller 321 of the mobile key unit 300 is designed to have functions of controlling an operation of the radio-signal transmitter 310, and carrying out communication by virtue of a communication protocol suitable for the communication. On receipt of a command from the controller 322, the communication controller 321 transmits an instruction to the radio-signal transmitter 310 to wait for a request of making communication therewith, transmitted from the mobile terminal 200.

Hereinbelow is explained an operation of the system in accordance with the first embodiment, with reference to FIGs. 1 to 4.

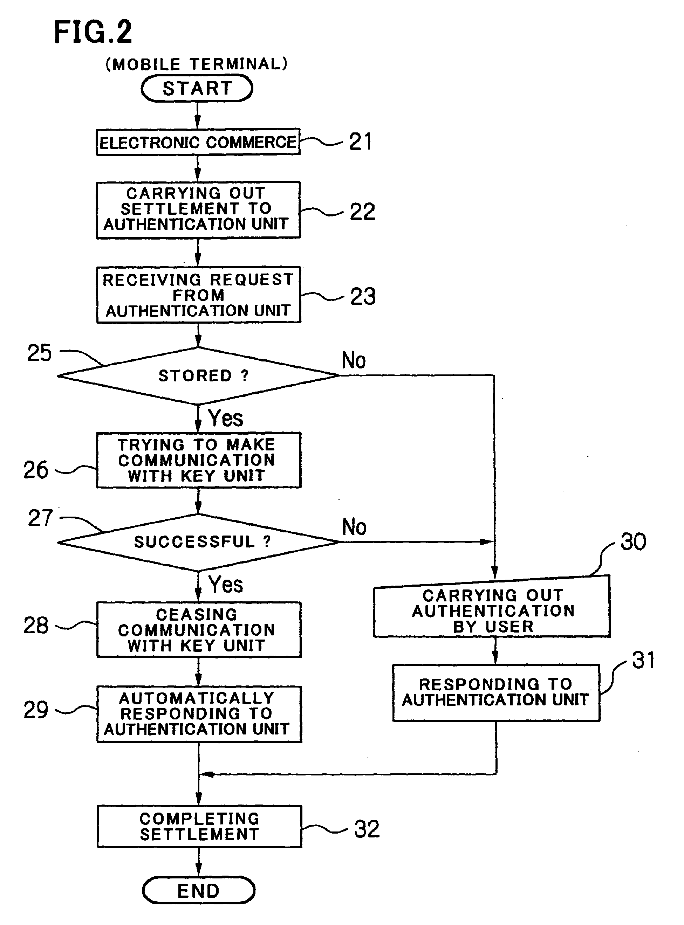

First, an operation of the mobile terminal 200 is explained with reference to FIG. 2.

It is assumed that a user 400 purchases something in electronic commerce through the mobile terminal 200 incorporated into his/her cellular phone, in step 21.

Then, the mobile terminal 200 makes radio-signal communication with the authentication unit 100 acting as a terminal installed in a shop only for electronic commerce, and carries out settlement account, in step 22.

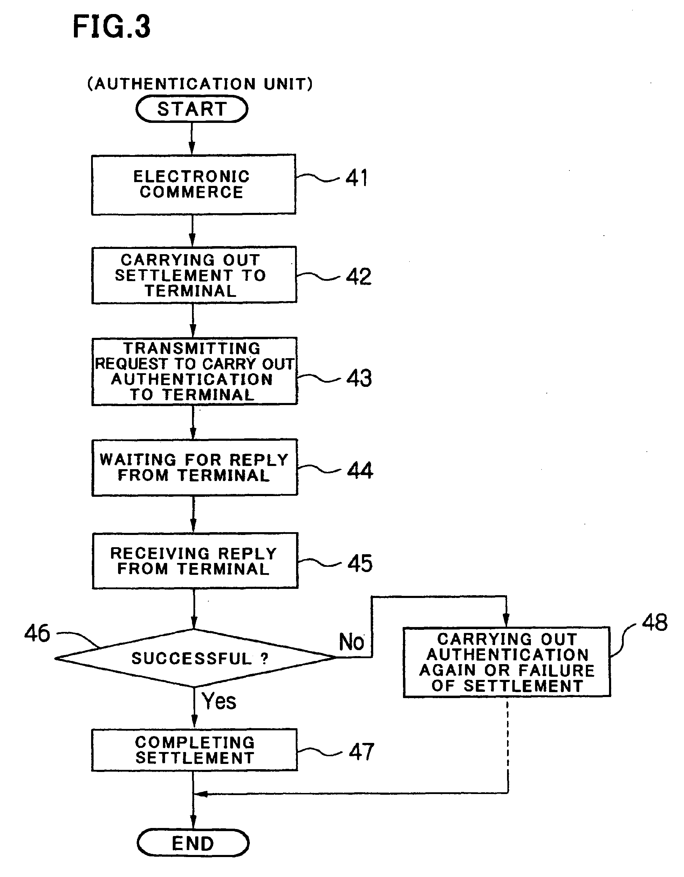

With reference to FIG. 3, the authentication unit 100 starts electronic commerce procedure with the mobile terminal 200, in step 41, and carries out settlement account to the mobile terminal 200, in step 42. Any communication system and settlement system may be selected, because the first embodiment is not dependent on them.

If authentication as to whether a user is really the person himself/herself is found necessary to be carried out in steps of carrying out settlement account, the authentication unit 100 requests the mobile terminal 200 to carry out authentication, in step 43.

Thereafter, the authentication unit 100 waits for a response to be transmitted from the mobile terminal 200. The authentication unit 100 may recognize that the authentication is in failure, if the authentication unit 100 does not receive a response from the mobile terminal 200 in a certain period of time. Herein, for simplification of the explanation, it is assumed that the authentication unit 100 waits for a response to be transmitted from the mobile terminal 200.

It is assumed herein that the authentication unit 100 is designed to make communication with a server (not illustrated), and is requested by the server to carry out authentication. However, the first embodiment is not dependent on where authentication is carried out.

Referring back to FIG. 2, the mobile terminal 200 receives a request to carry out authentication, from the authentication unit 100, in step 23. On receipt of the request, the controller 223 retrieves the memory 224 to check whether data necessary for carrying out automatic authentication, namely, data for identifying the mobile key unit 300 is stored in the memory 224, in step 25.

If the data is stored in the memory 224 (YES in step 25), the mobile terminal 200 tries to make communication with the mobile key unit 300, in step 26. The data for identifying the mobile key unit 300 may be comprised of a fabrication number unique to the mobile key unit 300, an address or an identification number in the form of software. The data identifies only one mobile key unit in an area in which the second radio-signal transmitter 211 and the radio-signal transmitter 310 can make radio-signal communication with each other. Data relating to the mobile key unit 300 and data indicative of a password may be stored into the memory 224 as they are, however, it is preferable that they are stored into the memory 224 after ciphered.

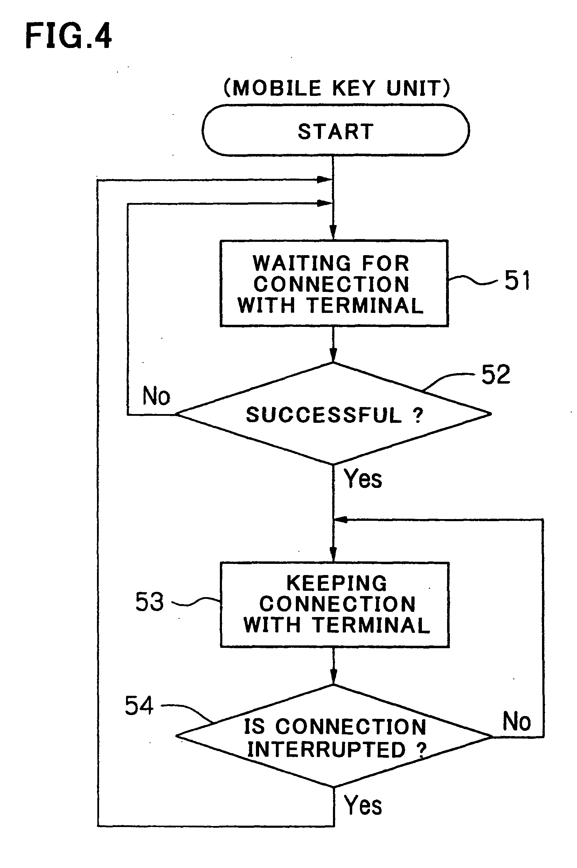

An operation of the mobile key unit 300 is explained hereinbelow with reference to FIG. 4.

When the mobile key unit 300 is turned on, the controller 322 instructs the communication controller 321 to wait for a request of making communication therewith, transmitted from the mobile terminal 200, in step 51. In accordance with the received instruction, the communication controller 321 puts the radio-signal transmitter 310 into a stand-by mode for waiting for a request of making communication therewith, transmitted from the mobile terminal 200.

If the radio-signal transmitter 310 receives a request transmitted from the second radio-signal transmitter 211 (step 26 in FIG. 2), the second communication controller 222 and the communication controller 321 carry out steps necessary for making communication with each other, by virtue of radio-signal communication protocols of them.

Then, the controller 322 judges whether the mobile key unit 300 is successful in making communication with the mobile terminal 200, in step 52.

If successful (YES in step 52), the mobile key unit 300 keeps making communication with the mobile terminal 200, in step 53. However, the mobile terminal 200 stops making communication with the mobile key unit 300 immediately after the mobile key unit was successful in making communication with the mobile terminal 200.

If the communication between the mobile terminal 200 and the mobile key unit 300 is stopped (YES in step 54), the mobile key unit 300 returns to an initial condition. Namely, the controller 322 instructs the communication controller 321 to wait for a request of making communication therewith, transmitted from the mobile terminal 200, in step 51. While the mobile terminal 200 does not stop making communication with the mobile key unit 300 (NO in step 54), the mobile key unit 300 and the mobile terminal 200 are kept in communication with each other (step 53).

Referring back to FIG. 2, the second communication controller 222 informs the controller 223 of whether communication with the mobile key unit 300, tried in step 26, was successful or in failure. If the controller 223 is informed of success in making communication with the key unit 300 (YES in step 27), the controller 223 judges that a user of the mobile terminal 200 is the person himself/herself. Then, in order to save power consumption by radio-signal communication, the controller 223 interrupts the communication with the mobile key unit 300, in step 28.

Then, the controller 223 responds to the request of carrying out authentication, transmitted from the authentication unit 100, in accordance with data read out of the memory 224 for automatic response to the authentication unit 100, in step 29.

If the data is not stored in the memory 224 (NO in step 25), or if communication with the mobile key unit 300 is in failure (NO in step 27), the controller 223 does not automatically respond to the authentication unit 100, but requests a user 400 through the user interface unit 230 to input necessary data for carrying out authentication, into the mobile terminal 200, in step 30. For instance, the controller 223 requests a user 400 to input a predetermined password into the mobile terminal 200.

On receipt necessary data put by a user 400 into the mobile terminal 200 through the user interface unit 230, the controller 223 responds to the authentication unit 100, based on the data having been input by a user 400, in step 31.

After the authentication has been successfully carried out in step 29 or 31, the mobile terminal 200 thus completes settlement account in electronic commerce, in step 32.

Referring back to FIG. 3, an operation of the authentication unit 100 is explained again hereinbelow.

The authentication unit 100 receives a response relating to the authentication, from the mobile terminal 200, in step 45. It is not necessary for the authentication unit 100 to know that the response was automatically transmitted from the mobile terminal 200 or that authentication could not be carried out for some reason, and hence, the response was input directly by a user 400. The authentication unit 100 merely carries out authentication in accordance predetermined steps.

The authentication unit 100 judges whether the authentication was successful or not, based on the response received from the mobile terminal 2, in step 46. If the authentication was successful (YES in step 46), the settlement account is thus completed, in step 47. If the authentication was not successful (NO in step 46), the controller 122 carries out again steps for authentication or confirms that the settlement account was in failure, in step 48. Subsequent steps to be carried out by the authentication unit 100 are not relevant to the present invention, and hence, are not explained.

In the system in accordance with the first embodiment, the mobile key unit 300 recorded in the mobile terminal 200 as a pair is incorporated into an accessory a user 400 always has. Thus, it is possible to carry out authentication by checking whether the mobile key unit 300 is located in an area in which the mobile terminal 200 can make short-distance radio-signal communication with the mobile key unit 300. Thus, authentication for settlement account in electronic commerce can be carried out for a user 400 without knowing that he/she is authenticated. Thus, it is possible to carry out authentication as to whether a user of the mobile terminal 200 is really the person himself/herself without necessity for a user 400 to carry out tiresome steps such as inputting a predetermined character(s) into his/her mobile terminal 200.

That is, when a user 400 settles account in electronic commerce through his/her mobile terminal 200, he/she is not requested to carry out steps of inputting a password into his/her mobile terminal 200, only if he/she has the mobile key unit 300 with himself/herself

In the system in accordance with the first embodiment, authentication is automatically carried out only when a mobile key unit data of which has been recorded in the mobile terminal 200 is located in an area in which the mobile terminal 200 can make radio-signal communication with the mobile key unit. For instance, even if a user lost his/her mobile terminal 200, others cannot carry out authentication, unless the mobile key unit 300 is located within the above-mentioned area. In order to carry out authentication, others have to input a predetermined password into the mobile terminal 200, ensuring that it is possible to prevent others from illegally using the mobile terminal 200.

Since authentication is automatically carried out without necessity of a user to input any data into the mobile terminal 200 in the system in accordance with the first embodiment, a user 400 can select a quite long password comprised of tens or hundreds of characters, for instance. This ensures that even if a user 400 lost his/her mobile terminal 200, others would be quite difficult to illegally use the mobile terminal 200. Such a long password usually causes a user 400 to carry out tiresome step of inputting a password into his/her mobile terminal 200, resulting in deterioration in serviceability. However, since authentication is automatically carried out in the first embodiment, no inconvenience would be caused for a user 400, even if a password is long. Thus, a user 400 could have sufficient security by selecting a long password.

In addition, since authentication is automatically carried out in the first embodiment, it is not necessary for a user 400 to input a password into his/her mobile terminal 200 at shopping. One of reasons why a password is leaked is that others peep a password when a user 400 inputs a password into his/her mobile terminal 200. It is no longer necessary for a user 400 to input a password into his/her mobile terminal 200 in the first embodiment, and hence, a password is no longer leaked by being peeped by others.

In the system in accordance with the first embodiment, communication, settlement and authentication may be carried out in any way between the authentication unit 100 and the mobile terminal 200. Furthermore, communication may be carried out in any way between the mobile terminal 200 and the mobile key unit 300. Hence, a broadly spreading device for making short-distance radio-signal communication can be used, and in addition, compatibility between such a device and the mobile terminal 200 or the mobile key unit 300 can be maintained by merely revising software of the device.

The system in accordance with the first embodiment can properly work, only if the mobile terminal 200 and the mobile key unit 300 can make radio-signal communication with each other. Hence, even if the mobile terminal 200 and the mobile key unit 300 are fabricated by different manufactures, it is expected that they can make radio-signal communication with each other at high provability, if they are dependent on common radio-signal technology.

In addition, the authentication unit 100, the mobile terminal 200 and the mobile key unit 300 are independent of one another, and hence, each of them is not necessary to know steps carried out by other units. Thus, whether it is possible to make connection with one another is considered in a small number of matters. Hence, even if the authentication unit 100, the mobile terminal 200 and the mobile key unit 300 are manufactured by different manufactures, it would be possible for them to make radio-signal communication with one another.

As the authentication unit 100 may be used any conventional authentication unit. Any communication system may be used for the authentication unit 100, the mobile terminal 200 and the mobile key unit 300, and hence, any conventional short-distance radio-signal communication technique may be used for the system in accordance with the first embodiment. This is one of reasons why the system can be constructed cheaply.

A device such as a mobile terminal to which a short-distance radio-signal communication unit is already incorporated for other use can be incorporated into the system in accordance with the first embodiment merely by installing additional software thereinto.

Short-distance radio-signal communication technique used in the system in accordance with the first embodiment may be used for purposes other than authentication. It is obvious that the system in accordance with the first embodiment can be more readily fabricated in lower cost than systems using biometric authentication such as fingerprint authentication, voiceprint authentication or iris authentication. That is, the system in accordance with the first embodiment presents security in electronic commerce and convenience for a user, namely, simple steps to be carried out for authentication, without an increase in fabrication cost.

### [Second Embodiment]

In the system in accordance with the above-mentioned first embodiment, illustrated in FIG. 1, the controller 223 of the mobile terminal 200, on receipt of a request to carry out authentication from the authentication unit 100, automatically responds to the request by using data necessary for automatic authentication, stored in the memory 224.

However, in actual, the authentication unit 100 and an electronic commerce system in a shop do not always have a suitable unit for carrying out authentication. Since the present invention is not dependent on authentication carried out between the authentication unit 100 and the mobile terminal 200, the present invention may be applied to a system in which authentication is not carried out. In a system in which a user is not requested to make signature in credit-card shopping, settlement is completed merely by reading a credit card through a card-reader without requesting a user to carry out steps for authentication. This system is quite convenient to a user, but cannot present sufficient security.

The system in accordance with the second embodiment is suitable for such a system as mentioned above. Specifically, a mobile terminal in the second embodiment is designed to carry out authentication by itself.

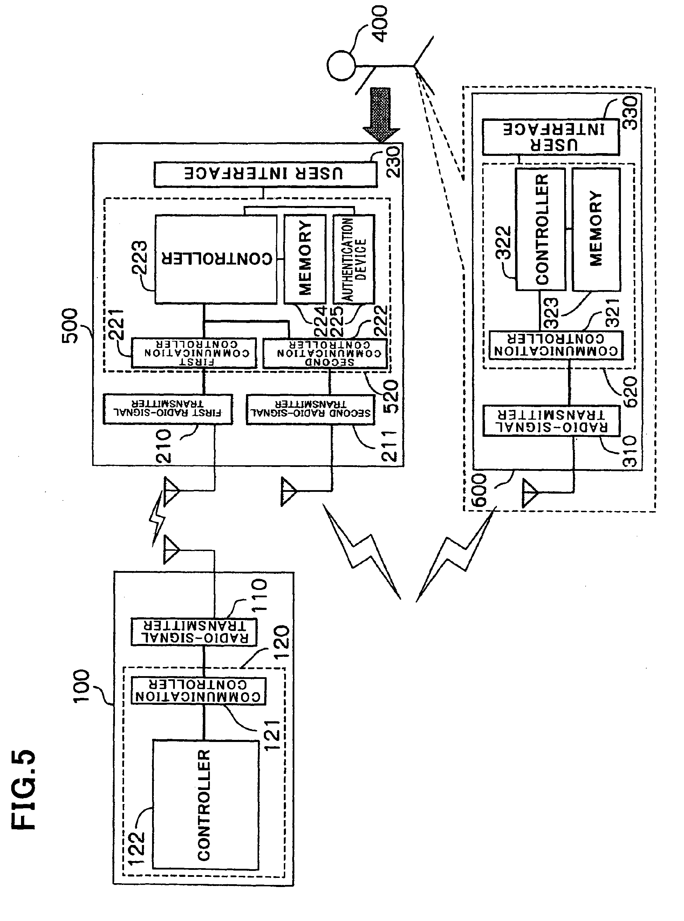

FIG. 5 is a block diagram of a system for carrying out authentication in settlement account in electronic commerce as to whether a user is really the person himself/herself, in accordance with the second embodiment of the present invention. In FIG. 5, parts or elements that correspond to those of the system illustrated in FIG. 1 have been provided with the same reference numerals, and operate in the same manner as corresponding parts or elements in the first embodiment, unless explicitly explained hereinbelow.

The system in accordance with the second embodiment is comprised of an authentication unit 100, a mobile terminal 500 and a mobile key unit 600.

The mobile terminal 500 is designed to include a computer 520 in place of the computer 220 in comparison with the mobile terminal 200 in the first embodiment. The computer 520 is structurally different from the computer 220 in additionally including an authentication device 225.

The mobile key unit 600 is designed to include a computer 620 in place of the computer 320 in comparison with the mobile key terminal 300 in the first embodiment. The computer 620 is structurally different from the computer 320 in additionally including a user interface unit 330.

In the system in accordance with the second embodiment, since the mobile terminal 500 is designed to include the authentication device 225, the controller 223 of the mobile terminal 500 can carry out authentication. As an alternative, the controller 223 may request a user 400 through the user interface unit 230 to input a predetermined password thereinto for authentication.

In the system in accordance with the second embodiment, the mobile terminal 500 judges that a user 400 of the mobile terminal 500 is really the person himself/herself, when the mobile key unit 600 is located within an area in which the mobile terminal 500 can make radio-signal communication with the mobile key unit 600, and then, carry out settlement account in electronic commerce to the authentication unit 100, in which case, the authentication unit 100 does not carry out authentication.

If the mobile key unit 600 is not located within the above-mentioned area, or if information about the mobile key unit 600 is not stored in the memory 224, the controller 223 activates the authentication device 225, and requests a user 400 through the user interface unit 230 to do some steps for authentication, for instance, input a password thereinto.

In accordance with the second embodiment, even if a user 400 lost the mobile terminal 500, it would be possible to prevent illegal use by others, and unless a user 400 has the mobile key unit 600 with himself/herself, serviceability is not deteriorated.

Settlement account in electronic commerce is carried out without carrying out authentication in some systems like a system in which a user is not requested to make signature in credit card shopping. Even in such some systems, security can be enhanced merely adding the mobile terminal 500 and the mobile key unit 600 to a system without any re-construction of the system. In addition, serviceability can be maintained, because authentication is not carried out.

In the second embodiment, the authentication unit 100 makes radio-signal communication with the mobile terminal 500. Herein, radio-signal communication includes communication by means of a non-contact type IC, infra-red ray, Bluetooth and radio-signal LAN. In addition, a contact type terminal such as a card reader may be used in the present invention.

The authentication unit 100 and the mobile terminal unit 500 may make communication with each other through a cellular phone network or Internet for carrying out settlement account in electronic commerce. This is because the present invention is not dependent on environment of a unit which carries out electronic commerce.

In the first and second embodiments, information about the mobile key units 300 and 600 are stored in the memories 224 of the mobile terminals 200 and 500 without requesting a user 400 to do some steps. However, for instance, the mobile terminals 200 and 500 may request a user 400 to input a password thereinto for storing the information in order to enhance reliability. Though inputting a password is tiresome for a user 400, if a user 400 inputs a password into the mobile terminal 200 or 500 only once for storing information about the mobile key unit 300 or 600 into the mobile terminal 200 or 500, a user 400 is no longer requested to input a password into the mobile terminal 200 or 500, because authentication is automatically carried out in settlement account in electronic commerce.

Since the mobile key unit 600 in the second embodiment includes the user interface unit 330, a user 400 may input a password into the mobile key unit 600 through the user interface unit 330. Thus, if a user 400 inputs a password into one of the mobile terminal 500 and the mobile key unit 600, they can transmit the thus input password to each other. By using a password which only a user 400 knows, as well as information unique to a mobile terminal or a mobile key unit, such as a manufacture number, an address and an identification number in the form of software, it would be possible to prevent others from illegally the mobile terminal 500.

In order to further enhance reliability, information about the mobile key unit 600, stored in the memory 224 may be updated periodically or when some event occurs.

The mobile terminal 200 or 500 and the mobile key unit 300 or 600 may exchange secret data to each other when they make communication to each other, in order to enhance reliability. As an alternative, information to be transmitted between the mobile terminal 200 or 500 and the mobile key unit 300 or 600 may be ciphered to enhance security.

In the above-mentioned first and second embodiments, only one data is stored in the memory 224 of the mobile terminal 200 or 500. However, it should be noted that data relating to a plurality of mobile key units may be stored in the memory 224 of the mobile terminal 200 or 500. When such data is stored in the memory 224, the controller 223 may check the data in an order determined in accordance with a certain rule. As an alternative, the controller 223 may check all of the data at a time, and may judge that a user 400 is really the person himself/herself, if the mobile terminal 200 or 500 can make radio-signal communication with at least one of the mobile key units. The controller 223 may select one or more of the mobile key units to be checked, in accordance with a sum of money, conditions for settlement account, and so on.

Similarly, the mobile key unit 300 or 600 may store data relating to one or more mobile terminal(s), in the memory 323.

In the above-mentioned first and second embodiments, authentication is automatically carried out. There may be determined a condition in accordance with which authentication is carried out. For instance, authentication may be automatically carried out for a sum of money equal to or smaller than a predetermined sum of money, and authentication is not automatically carried out, but a user is requested to input a password into the mobile terminal 200 or 500, if a sum of money is higher than the predetermined sum of money. Similarly, authentication may be automatically carried out only for particular settlement.

Since the mobile terminals 200 and 500 and the mobile key units 300 and 600 are designed to include the user interface unit 230, a user 400 can store additional data such as registration title, registration date or expiration date into the memory 224 in connection with data about the mobile key unit 300 or 600, stored in the memory 224. Furthermore, a user 400 can protect, delete or edit data stored in the memory 224, through the user interface unit 230.

In the above-mentioned first and second embodiments, authentication is automatically carried out only when the mobile terminal 200 or 500 can make radio-signal communication with the mobile key unit 300 or 600. However, it is not always necessary for the mobile terminal 200 or 500 to be able to make radio-signal communication with the mobile key unit 300 or 600, because the principle of the present invention lays in whether both of the mobile terminal 200 or 500 and the mobile key unit 300 or 600 are located in an area in which they can make radio-signal communication to each other. For instance, the mobile terminal 200 or 500 may check whether the mobile key unit 300 or 600 is located in the above-mentioned area, by virtue of a function of searching the mobile key unit 300 or 600 which function is derived from short-distance radio-signal communication technique mounted in the mobile terminal 200 or 500.

In the above-mentioned first and second embodiments, the mobile key unit 300 or 600 is kept on to wait for a request transmitted from the authentication unit 100. In order to reduce power consumption in the mobile key unit 300 or 600, the mobile key unit 300 or 600 may be kept off, and may be turned on in a single step such as actuating a predetermined key, when the mobile key unit 300 or 600 is used. To the contrary, if the mobile key unit 300 or 600 can have a battery which is capable of sufficiently provide power, the mobile key unit 300 or 600 may be kept in communication with the mobile terminal 200 or 500 under a power-saving mode, in which case, the mobile terminal 200 or 500 can smoothly check data about the mobile key unit 300 or 600 and make communication with the mobile key unit 300 or 600.

The systems in accordance with the first and second embodiments are comprised of the authentication unit 100, the mobile terminal 200 or 500, and the mobile key unit 300 or 600. However, it should be noted that the system may be comprised only of the mobile terminal 200 or 500 and the mobile key unit 300 or 600, because the authentication unit 100 is independent of the mobile terminal 200 or 500 and the mobile key unit 300 or 600.

The mobile terminal 200 or 500 has such a structure as mentioned above, and operates in such a manner as mentioned above.

The controller 223 in the mobile terminal 200 or 500 may be accomplished by a data processor, and a program to carry out the requisite functions of the controller 223. Such a program may be presented through a recording medium readable by a computer. The program is read out into a data processor when the data processor starts its operation. By controlling an operation of the data processor, the parts constituting the computer 220 or 520, such as the first communication controller 221, the second communication controller 222, the memory 224 and the authentication device 225, can be accomplished in the data processor. The memory 224 can be accomplished by a storage device of the data processor, such as a magnetic disc.

An operation of the controller 223 can be accomplished by a computer program written in a language readable by a computer.

For operating the controller 223 by means of a computer program, the controller 223 is designed to include a memory to store a computer program therein, for instance. The computer program is stored in the memory, and is read out into the controller 223 when the computer 220 or 520 starts its operation. Thus, such an operation of the controller 223 as mentioned above is accomplished in accordance with the computer program.

As an alternative, a recording medium storing such a computer program as mentioned above may be set into the computer 220 or 520 to be read out by the computer 220 or 520.

The functions of the controller 223 may be accomplished as a program including various commands, and be presented through a recording medium readable by a computer.

In the specification, the term "recording medium" means any medium which can record data therein.

The term "recording medium" includes, for instance, a disk-shaped recorder such as CD-ROM (Compact Disk-ROM) or PD, a magnetic tape, MO (Magneto Optical Disk), DVD-ROM (Digital Video Disk-Read Only Memory), DVD-RAM (Digital Video Disk-Random Access Memory), a floppy disk, a memory chip such as RAM (Random Access Memory) or ROM (Read Only Memory), EPROM (Erasable Programmable Read Only Memory), EEPROM (Electrically Erasable Programmable Read Only Memory), smart media (Registered Trade Mark), a flush memory, a rewritable card-type ROM such as a compact flush card, a hard disk, and any other suitable means for storing a program therein.

A recording medium storing a program for accomplishing the functions of the controller 223 may be accomplished by programming functions of the above-mentioned apparatuses with a programming language readable by a computer, and recording the program in a recording medium such as mentioned above.

## Claims

1. A system for carrying out authentication in settlement account in electronic commerce as to whether a user (400) is really the person himself/herself, **characterized by**:
a mobile key unit (300, 600) having a function of making short-distance radio-signal communication; and
a mobile terminal (200, 500) having a function of making radio-signal communication,
wherein the mobile terminal (200, 500) recognizes that a user (400) thereof is the person himself/herself only when the mobile key unit (300, 600) is located in an area in which the mobile terminal (200, 500) can make radio-signal communication with the mobile key unit (300, 600).

2. The system as set forth in claim 1, further including an authentication unit (100) for carrying out authentication in settlement account, and wherein the mobile terminal (200, 500), on receipt of a request of carrying out authentication from the authentication unit (100), transmits a request to the mobile key unit (300, 600) to make communication by transmitting radio-signals to the mobile key unit (300, 600), and transmits a response to the authentication unit (100), based on information stored therein, if data relating to the mobile key unit (300, 600) with which the mobile terminal (200, 500) was successful in making radio-signal communication is coincident with data in advance stored in the mobile terminal (200, 500).

3. The system as set forth in claim 1 or 2, wherein the mobile terminal (200, 500) requests a user (400) to input a password thereinto for authentication, if data relating to the mobile key unit (300, 600) with which the mobile terminal (200, 500) was successful in making radio-signal communication is not coincident with data in advance stored in the mobile terminal (200, 500), or if the mobile terminal (200, 500) was not successful in making radio-signal communication with the mobile key unit (300, 600).

4. The system as set forth in claim 1 or 2, wherein the mobile key unit (300, 600) makes radio-signal communication with the mobile terminal (200, 500) in response to the request transmitted from the mobile terminal (200, 500), if data relating to the mobile terminal (200, 500) transmitting the request to the mobile key unit (300, 600) is coincident with data in advance stored therein.

5. The system as set forth in claim 1 or 2, wherein the mobile terminal (200, 500) and the mobile key unit (300, 600) make communication with each other through radio-signal LAN.

6. The system as set forth in claim 1 or 2, wherein the mobile terminal (200, 500) and the mobile key unit (300, 600) make communication with each other through Bluetooth.

7. The system as set forth in claim 1 or 2, wherein the mobile key unit (300, 600) responds to the request received from the mobile terminal (200, 500) only when the mobile key unit (300, 600) is located within a predetermined distance from the mobile terminal (200, 500).

8. The system as set forth in claim 1 or 2, wherein the mobile key unit (300, 600) is incorporated into an accessory of the user (400).

9. The system as set forth in claim 1 or 2, wherein the mobile terminal (200, 500) is comprised of a cellular phone.

10. The system as set forth in claim 1 or 2, wherein the mobile terminal (200, 500) is comprised of a personal digital assistance (PDA).

11. The system as set forth in claim 1 or 2, wherein the system includes a plurality of mobile key unit (300, 600)s.

12. The system as set forth in claim 11, wherein the mobile terminal (200, 500) checks data relating to the mobile key unit (300, 600)s, in an order determined in accordance with a predetermined rule.

13. The system as set forth in claim 11, wherein the mobile terminal (200, 500) selects one or more of the mobile key unit (300, 600)s to which a request to make communication is transmitted, in accordance with a predetermined condition.

14. A method of carrying out authentication in settlement account in electronic commerce as to whether a user (400) is really the person himself/herself, including:
(a) transmitting a request to a mobile key unit (300, 600) having a function of making short-distance radio-signal communication, from a mobile terminal (200, 500) having a function of making radio-signal communication, to make communication by transmitting radio-signals to the mobile key unit (300, 600); and
(b) recognizing that a user (400) of the mobile terminal (200, 500) is the person himself/herself only when the mobile terminal (200, 500) is successful in making radio-signal communication with the mobile key unit (300, 600).

15. The method as set forth in claim 14, further including:
storing data relating to the mobile key unit (300, 600) into the mobile terminal (200, 500);
transmitting a request of carrying out authentication to the mobile terminal (200, 500) from an authentication unit (100) for carrying out authentication in settlement account;
transmitting a response to the authentication unit (100) from the mobile terminal (200, 500), based on information stored in the mobile terminal (200, 500), if data relating to the mobile key unit (300, 600) with which the mobile terminal (200, 500) was successful in making radio-signal communication is coincident with data in advance stored in the mobile terminal (200, 500).

16. The method as set forth in claim 15, further including requesting a user (400) to input a password into the mobile terminal (200, 500) for authentication, if data relating to the mobile key unit (300, 600) with which the mobile terminal (200, 500) was successful in making radio-signal communication is not coincident with data in advance stored in the mobile terminal (200, 500), or if the mobile terminal (200, 500) was not successful in making radio-signal communication with the mobile key unit (300, 600).

17. The method as set forth in claim 15, further including (f) making radio-signal communication with the mobile terminal (200, 500) in response to the request transmitted from the mobile terminal (200, 500), if data relating to the mobile terminal (200, 500) transmitting the request to the mobile key unit (300, 600) is coincident with data in advance stored in the mobile key unit (300, 600), the (f) being carried out by the mobile key unit (300, 600).

18. A program for causing a computer mounted in a mobile terminal (200, 500) having a function of making radio-signal communication, to carry out a method of carrying out authentication in settlement account in electronic commerce as to whether a user (400) is really the person himself/herself, steps executed by the computer in accordance with the program including:
(a) storing therein data relating to a mobile key unit (300, 600) having a function of short-distance making radio-signal communication;
(b) on receipt of a request of carrying out authentication from an authentication unit (100) for carrying out authentication in settlement account, transmitting a request to the mobile key unit (300, 600) to make communication by transmitting radio-signals to the mobile key unit (300, 600); and
(c) transmitting a response to the authentication unit (100), based on information stored in the mobile terminal (200, 500), if data relating to the mobile key unit (300, 600) with which the mobile terminal (200, 500) was successful in making radio-signal communication is coincident with data in advance stored in the mobile terminal (200, 500).

19. The program as set forth in claim 18, wherein the steps further include
(d) requesting a user (400) to input a password into the mobile terminal (200, 500) for authentication, if data relating to the mobile key unit (300, 600) with which the mobile terminal (200, 500) was successful in making radio-signal communication is not coincident with data in advance stored in the mobile terminal (200, 500), or if the mobile terminal (200, 500) was not successful in making radio-signal communication with the mobile key unit (300, 600).
